# EUROPEAN PATENT APPLICATION

(11) **EP 2 752 777 A2**
(43) Date of publication of application: **09.07.2014**
(21) Application number: 13005058.6
(22) Date of filing: 23.10.2013
(51) Int. Cl.: G06F 17/30

(54) **Method for intelligent search service using situation recognition and terminal thereof**

(30) Priority: 07.01.2013 KR 20130001557
(71) Applicant: LG Electronics, Inc., Seoul, 150-721 (KR)
(72) Inventor: Kim, Byunggyu, 153-801 Seoul (KR); Kim, Seungyong, 153-801 Seoul (KR); Lee, Hyunmyung, 153-801 Seoul (KR); Chae, Hyangseok, 153-801 Seoul (KR)
(74) Representative: Katérle, Axel

(57) **Abstract**

A terminal including a wireless communication unit configured to wirelessly communicate with at least one other terminal; a display configured to display a search window for inputting a keyword; and a controller to determine an internal situation corresponding to an internal application on the mobile terminal or an external situation corresponding to an external environment of the mobile terminal, search for the input keyword, determine an output priority for displaying results of the search for the input keyword based on the determined internal situation or external situation of the mobile terminal, and display the results of the search according to the determined output priority.

## Description

### CROSS-REFERENCE TO RELATED APPLICATIONS

The present application claims priority under 35 U.S.C. 119 and 35 U.S.C. 365 to Korean Patent Application No. 10-2013-0001557 (filed on January 7, 2013), which is hereby incorporated by reference in its entirety.

### BACKGROUND OF THE INVENTION

**Field of the Invention**

The present invention relates to an intelligent search service method and a corresponding terminal for performing a search service based on an internal situation or an external situation of the terminal.

**Discussion of the Background**

A terminal may be divided into a mobile terminal and a stationary terminal. The mobile terminal may be divided into a handheld terminal and a vehicle mount terminal. The terminal also functions a multi-function multimedia player device which has not only a function of communicating a voice, a text, a video, or an email, but also has complex functions such as capturing a video, reproducing a music or video file, a game, and receiving a broadcast.

Various search functions are also supported to allow the user to search for and select a content. In a related art search process, the user inputs a keyword search and the search is performed using the keyword. For example, the user can enter a search word into a GOOGLE application, and the results of the search are displayed on the terminal.

However, the search often generates hundreds of search results and the user must scroll through the multiple search results in an attempt to find the desired contents. This is very inconvenient for the user, especially on a terminal with a small display.

### SUMMARY OF THE INVENTION

Accordingly, one object of the present invention is to address the above noted and other problems with the related art.

Another object of the present invention is to provide an intelligent search service method and corresponding terminal for performing a search service using an internal situation or an external situation of the terminal.

Still another object of the present invention is to display the search results per each category according to a preset priority.

Yet another object of the present invention is to automatically display a search result in a subsequent application.

To achieve these and other advantages and in accordance with the purpose of the present invention, as embodied and broadly described herein, the present invention provides in one aspect a terminal including a wireless communication unit configured to wirelessly communicate with at least one other terminal; a display configured to display a search window for inputting a keyword; and a controller to determine an internal situation corresponding to an internal application on the mobile terminal or an external situation corresponding to an external environment of the mobile terminal, search for the input keyword, determine an output priority for displaying results of the search for the input keyword based on the determined internal situation or external situation of the mobile terminal, and display the results of the search according to the determined output priority.

In another aspect, the present invention provides a terminal including a wireless communication unit configured to wirelessly communicate with at least one other terminal; a display configured to display information; and a controller configured to determine an internal situation corresponding to an internal application on the mobile terminal or an external situation corresponding to an external environment of the mobile terminal, extract a keyword from the displayed information, and display in a search window the extracted keyword along with a category icon corresponding to an executable application using the keyword based on the determined internal situation or the external situation of the mobile terminal.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:

Fig. 1 is an overview illustrating a method for performing an intelligent search service using situation recognition information according to an embodiment of the present invention;

Fig. 2 is a block diagram illustrating a mobile terminal according to an embodiment of the present invention;

Fig. 3 is a table illustrating situation recognition information according to an embodiment of the present invention;

Fig. 4 is a flow chart illustrating a method for performing an intelligent search service using situation recognition information according to an embodiment of the present invention;

Figs. 5A and 5B are display screens illustrating a method for performing an intelligent search service using situation recognition according to an embodiment of the present invention;

Figs. 6A to 6F are display screens illustrating a method for performing an intelligent search service using situation recognition according to another embodiment of the present invention;

Fig. 7 is a display screen illustrating a method for performing an intelligent search service using situation recognition in a social network context according to an embodiment of the present invention;

Fig. 8 is a view for explaining a method for performing an intelligent search service using a content metadata according to an embodiment of the present invention;

Fig. 9 is a display screen illustrating a method for performing an intelligent search service using a game application and a market data according to an embodiment of the present invention;

Fig. 10 is an overview illustrating a method for performing an intelligent search service using spatial situation recognition according to an embodiment of the present invention;

Fig. 11 is an overview illustrating a method for performing an intelligent search service using spatial situation recognition according to an embodiment of the present invention;

Fig. 12 is table listing illustrating a method for performing an intelligent search service using environmental situation recognition according to an embodiment of the present invention;

Fig. 13 includes display screens illustrating a method for performing an intelligent search service according to another embodiment of the present invention; and

Figs. 14A to 14D are display screens illustrating a method for performing an intelligent search service according to another embodiment of the present invention.

### DETAILED DESCRIPTION OF THE EMBODIMENTS

Hereinafter, embodiments of the present invention will be described in detail with reference to accompanying drawings. Embodiments described herein are provided for illustrative purposes only to help understanding of the present invention. Therefore, the present invention is not limited to embodiments described herein and may be embodied in different forms.

A mobile terminal described herein may include a portable phone, a smart phone, a pad, a note, a tablet PC, a laptop computer, a digital broadcast terminal, a personal digital assistant (PDA), a portable multimedia player (PMP), and navigation. However, the present invention is also applicable to a stationary terminal such as a digital TV or a desktop computer.

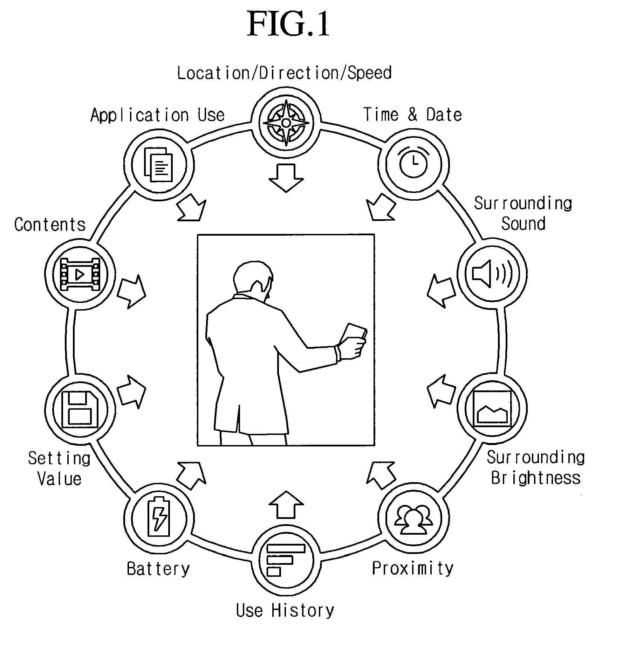

Fig. 1 is an overview illustrating a method of performing an intelligent search service using situation recognition according to an embodiment of the present invention. As shown, there are various internal and external situation the user will encounter when operating the terminal. For example, the user may be using a particular application (application use), viewing or listing to specific contents, setting a particular value on the terminal, the amount of battery usage, the user's or terminal's prior history, the proximity of the terminal to other objects or places, the surrounding brightness, the surrounding sound, the time and date, and the location/direction/speed of the terminal. Thus, there are multiple internal and external situations of the terminal that the present invention advantageously uses when performing a search.

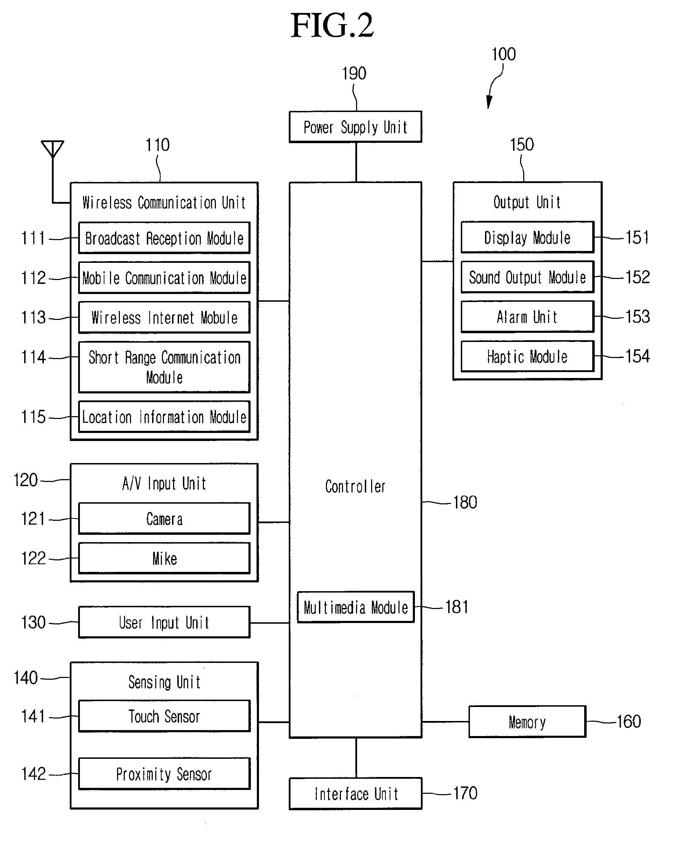

Next, referring to Fig. 2, a mobile terminal 100 according to an embodiment of the present invention includes a wireless communication unit 110, an audio/video (A/V) input unit 120, a user input unit 130, a sensing unit 140, an output unit 150, a memory 160, an interface unit 170, a controller 180, and a power supply unit 190. The mobile terminal 100 may have more or less elements.

Further, the mobile terminal 100 may include a multi mode portable terminal which respectively connects to communication networks according to two or more communication methods or operators and a multi standby portable terminal which simultaneously connects to communication networks according to at two or more communication methods or operators.

Hereinafter, for illustrative purposes, a mobile terminal according to an embodiment of the present invention is described to be the multi standby mobile terminal as an example. The multi standby mobile terminal is a portable terminal which simultaneously connects to three communication networks selected from a plurality of communication methods including, for example, Code Division Multiple Access (CDMA), Global System for Mobile telecommunication (GSM), Wideband Code Division Multiple Access (WCDMA), or Wireless broadband (Wibro) or for Korea, simultaneously connects to three communication networks selected from a plurality of operators including, for example, SKT, KTF, and LGT.

The wireless communication unit 110 also includes at least one module which enables a wireless communication between the mobile terminal 100 and a wireless communication system or between the mobile terminal 100 and a network in which the mobile terminal 100 is located. For example, in Fig. 2, the wireless communication unit 110 includes a broadcast receiving module 111, a mobile communication module 112, a wireless internet module 113, a short range communication module 114, and a location information module 115.

The broadcast receiving module 111 receives a broadcast signal and/or broadcast related information from an external broadcast management server through a broadcast channel. Here, the broadcast channel may include a satellite channel and a terrestrial channel. The broadcast management server may refer to a server which generates and transmits the broadcast signal and/or the broadcast related information or a server which receives an already generated broadcast signal and/or broadcast related information and transmits the already generated broadcast signal and/or broadcast related information to the terminal.

The broadcast signal may include not only a TV broadcast signal, a radio broadcast signal, and a data broadcast signal, but also a broadcast signal having a form in which the data broadcast signal is coupled to the TV broadcast signal or the radio broadcast signal.

Further, the broadcast related information may indicate information related to a broadcast channel, a broadcast program, or a broadcast service provider. The broadcast related information may be provided through a mobile communication network. In this instance, the broadcast related information may be received by the mobile communication module 112.

The broadcast related information may exist in a form of Electronic Program Guide (EPG) of Digital Multimedia Broadcasting (DMB) or Electronic Service Guide (ESG) of Digital Video Broadcast-Handheld (DVB-H). In addition, the broadcast receiving module 111 can receive a digital broadcast signal using a digital broadcast system such as Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), or Integrated Services Digital Broadcast-Terrestrial (ISDB-T).

The broadcast receiving module 111 may also be suitable not only for the above described digital broadcast system but also other broadcast systems. Further, the broadcast signal and/or broadcast related information received through the broadcast receiving module 111 may be stored in the memory 160.

The mobile communication module 112 transmits and receives a wireless signal to/from at least one of a base station, an external terminal, and a server on the mobile communication network. Here, the wireless signal may include a voice call signal, a video call signal, or a data in various forms according to transmitting and receiving a character/multimedia message.

In addition, the wireless internet module 113 refers to a module for wireless internet connection and may be built in or built out of the mobile terminal 100. A wireless internet technology such as Wireless LAN (WLAN)(Wi-Fi), Wireless broadband (Wibro), World Interoperability for Microwave Access (Wimax), or High Speed Downlink Packet Access (HSDPA) may be used.

Also, the short range communication module 114 refers to a module for a short range communication. A short range communication technology such as Bluetooth, Radio Frequency Identification (RFID), infrared Data Association (IrDA), Ultra Wideband (UWB), or ZigBee may be used.

The location information module 115 is a module for obtaining a location of the mobile terminal and, for example, a global position system (GPS) module. In addition, the audio/video (A/V) input unit 120 is for inputting an audio signal or a video signal and may include a camera 121 and a mike 122.

In more detail, the camera 121 processes a still image obtained by an image sensor in a video call mode or a photographing mode or a video frame such as a moving image. The processed video frame may be displayed on the display unit 151.

The video frame processed by the camera 121 can then be stored in the memory 160 or transmitted toward an outside through a wireless communication unit 110. Two or more cameras 121 may be included depending on a user environment.

Further, the mike 122 receives an external sound signal by a microphone in a call mode, a recording mode, or a voice recognition mode and processes the sound signal to be an electrical voice data. For the call mode, the processed voice data may be converted in a form transmittable to a mobile communication base station through the mobile communication module 112 to be outputted. In the mike 122, various noise removal algorithms for removing a noise generated during a process of receiving the external sound signal may be implemented.

In addition, the user input unit 130 generates an input data for controlling an operation of the terminal by a user. The user input unit 130 may include, for example, a key pad, a dome switch, a touch pad (constant voltage/constant current), a jog wheel, or a jog switch. The user input unit 130 may also include an identification module selection switch for generating a selection signal for selecting a certain identification module among a plurality of selection modules.

Also, the sensing unit 140 can detect a current state of the mobile terminal 100 such as an opening/closing state of the mobile terminal 100, a location of the mobile terminal 100, whether contacted by the user, an orientation of the mobile terminal, or an acceleration/deceleration of the mobile terminal to generate a sensing signal for controlling an operation of the mobile terminal 100.

For example, when the mobile terminal 100 is a slide phone type, the sensing unit 140 can sense whether the slide phone is opened or closed. Also, whether a power is supplied to the power supply unit 190 or whether an external device is coupled to the interface unit 170 may be sensed. The sensing unit 140 may include, for example, a touch sensor 141 and a proximity sensor 142. The touch sensor 141 is a sensor for detecting a touch operation. For example, the touch sensor 141 may have a form of a touch film, a touch sheet, or a touch pad.

The touch sensor 141 may have an inter layer structure (hereinafter, referred to as "touch screen") with the display unit 151. The touch sensor 141 may be configured to convert a pressure applied to a specific part of the display unit 151 or a change in capacitance generated at the specific part of the display unit 151 into an electrical input signal. The touch sensor 141 may be configured to detect not only a touched location and area but also a pressure by a touch.

When a touch input on the touch sensor 141 exits, a signal (or signals) corresponding thereto is transmitted to a touch controller. The touch controller processes the signal (or signals) and then transmits a corresponding data to the controller 180. Thus, the controller 180 can know which area of the display unit 151 is touched.

The proximity sensor 142 may be disposed in an internal area of the mobile terminal 100 surrounded by the touch screen or near the touch screen. The proximity sensor 142 refers to a sensor for detecting existence of an object which approaches a predetermined detection surface or exists in proximity using a force in an electromagnetic field or an infrared light, without a mechanical contact. The proximity sensor 142 also has a longer lifespan than a contact sensor and has higher utility.

An example of the proximity sensor 142 includes a transmissive photoelectric sensor, a direct reflective photoelectric sensor, a mirror reflective photoelectric sensor, a high frequency oscillation proximity sensor, a capacitive proximity sensor, a magnetic proximity sensor, and an infrared light proximity sensor. When the touch screen is capacitive, the touch screen is configured to detect a proximity of a pointer by a change in an electric field due to the proximity of the pointer. In this instance, the touch screen (touch sensor) may be classified into the proximity sensor.

In addition, "proximity touch" refers to an act of rendering a pointer which does not contact the touch screen but approaches the touch screen to be recognized as being located on the touch screen. A "contact touch" refers to an act of actually contacting the pointer on the touch screen. A location at which the pointer has the proximity touch on the touch screen means a location to which the pointer vertically corresponds with respect to the touch screen when the pointer has the proximity touch.

Further, the proximity sensor 142 detects the proximity touch and a proximity touch pattern (e.g., a proximity touch distance, a proximity touch direction, a proximity touch speed, a proximity touch time, a proximity touch location, a proximity touch movement, etc.). Information corresponding to the detected proximity touch and the proximity touch pattern may be output on the touch screen.

Next, the output unit 150 is used to generate an output related sight, hearing, or touch, and the output unit 150 includes a display unit 151, a sound output module 152, an alarm unit 153, and a haptic module 154.

The display unit 151 displays information processed in the mobile terminal 100. For example, when the mobile terminal is in the call mode, a user interface (UI) or a graphic user interface (GUI) related to a call is displayed. When the mobile terminal 100 is in the video call mode or the photographing mode, an image photographed and/or received, UI, or GUI is displayed.

The display unit 151 may also include at least one of a liquid crystal display (LCD), a thin film transistor-liquid crystal display (TFT LCD), an organic light-emitting diode (OLED), a flexible display, a three dimensional (3D) display.

Also, a portion of the display among these may be formed in a transparent or a light transmissive type such that an outside can be seen therethrough. This type of display may be called as a transparent display, and a representative example of the transparent display is a transparent OLED (TOLED).

Also, a rear structure of the display unit 151 may also be configured in the light transmissive type. Through this structure, the user may view an object located in a back of a terminal body through an area occupied by the display unit 151 of the terminal body. Depending on an implementation form of the mobile terminal 100, two or more display units 151 may exist. For example, in the mobile terminal 100, a plurality of displays may be separated on a surface or integrally disposed or disposed respectively on different surfaces.

In addition, the sound output module 152 can output an audio data received from the wireless communication unit 110 upon a call signal receipt, in the call mode, the recording mode, the voice recognition mode or the broadcast receiving mode or stored in the memory 160. The sound output module 152 can also output a sound signal related to a function (e.g., a call signal receipt sound, a message receipt sound, etc.) which is performed by the mobile terminal 100. The sound output module 152 may include a receiver, a speaker, or a buzzer.

Further, the alarm unit 153 outputs a signal for notifying an event generation of the mobile terminal 100. An example of an event generated in the mobile terminal 100 includes a call signal receipt, a message receipt, a key signal input, and a touch input. The alarm unit 153 may output a signal other than a video signal or an audio signal, e.g., a signal for notifying the event generation by vibration. The video signal or the audio signal may also be output through the display unit 151 or the voice output module 152. Therefore, the display unit 151 or the voice output module 152 may be classified as a part of the alarm unit 153.

In addition, the haptic module 154 generates various touch effects which can be felt by the user. A representative example of a touch effect generated by the haptic module 154 is vibration. A strength and a pattern of the vibration of the haptic module 154 may be controlled. For example, different vibrations may be synthesized to be output or sequentially output.

The haptic module 154 can also generate various touch effects other than vibration such as an effect of a stimulus by, for example, a pin arrangement which moves vertically with respect to a contact skin surface, an injection force or suction force of an air through an injection hole or a suction hole, brushing a skin surface, a contact of an electrode, or an electrostatic force and an effect of reproducing coldness and hotness using an element capable of heat absorption or heat generation.

Further, the haptic module 154 is not only capable of transmitting the touch effect through a direct touch but also embody the touch effect through a muscle sense of, for example, a finger or an arm of the user. Two or more haptic modules 154 may be provided depending on a type of formation of the mobile terminal 100.

In addition, the memory 160 may store a program for operating the controller 180 and may temporarily store input/output data (e.g., an address book, a message, a stationary image, a video, etc.). The memory 160 can also store a data related to vibration of various patterns and sound which are output upon the touch input on the touch screen.

Further, the memory 160 may include at least one type of a storage medium among a flash memory type memory, a hard disk type memory, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optic disk. The terminal 100 may operate in association with a web storage which performs a storage function of the memory 160 on internet.

The interface unit 170 performs a role of a passage with all external devices connected to the mobile terminal 100. The interface unit 170 receives a data from the external device, is provided with a power and transmits the power to each element within the mobile terminal 100, or transmits a data within the mobile terminal 100 to the external device.

For example, a wired/wireless headset port, an external charger port, a wired/wireless data port, a memory card port, a port for connecting to an apparatus having an identification module, an audio input/output (I/O) port, a video input/output (I/O) port, and an earphone port may be included in the interface unit 170.

Also, the identification module 200 is a chip for storing various information for authenticating a user access of the mobile terminal 100 and may include a user identify module (UIM), a subscriber identity module (SIM), and a universal subscriber identity module (USIM). The apparatus having the identification module (hereinafter, "identification apparatus") may be manufactured in a smart card form. Therefore, the identification apparatus may be connected to the terminal 100 through a port.

In addition, the interface unit 170 may be used as a passage for supplying a power from a cradle to the mobile terminal 100 when the mobile terminal 100 is connected to an external cradle or a passage for transmitting various command signals input from the cradle by the user to the mobile terminal. The various command signals or power input from the cradle may be operated as a signal for recognizing that the mobile terminal 100 is accurately mounted to the cradle.

Next, the controller 180 controls an overall operation of the mobile terminal. For example, the controller 180 can perform control and processing related to the voice call, the data communication, or the video call. The controller 180 can include a multimedia module 181 for reproducing a multimedia. The multimedia module 181 may be implemented within the controller 180 and may be implemented separately from the controller 180.

Further, the power supply unit 190 receives an external power and an internal power according to a control of the controller 180 and supplies a power needed for operating each element.

Various embodiments described herein may be embodied by, for example, a recording medium readable by a computer or a similar device thereof by using software, hardware, or a combination thereof.

In a hardware implementation, embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and other electrical units for performing functions. In some cases, the embodiments may be implemented by the controller 180.

In a software implementation, embodiments such as a process or a function may be implemented together with a separate software module for performing at least one function or operation. A software code may be implemented by a software application written in an appropriate program language. The software code may be stored in the memory 160 and executed by the controller 180.

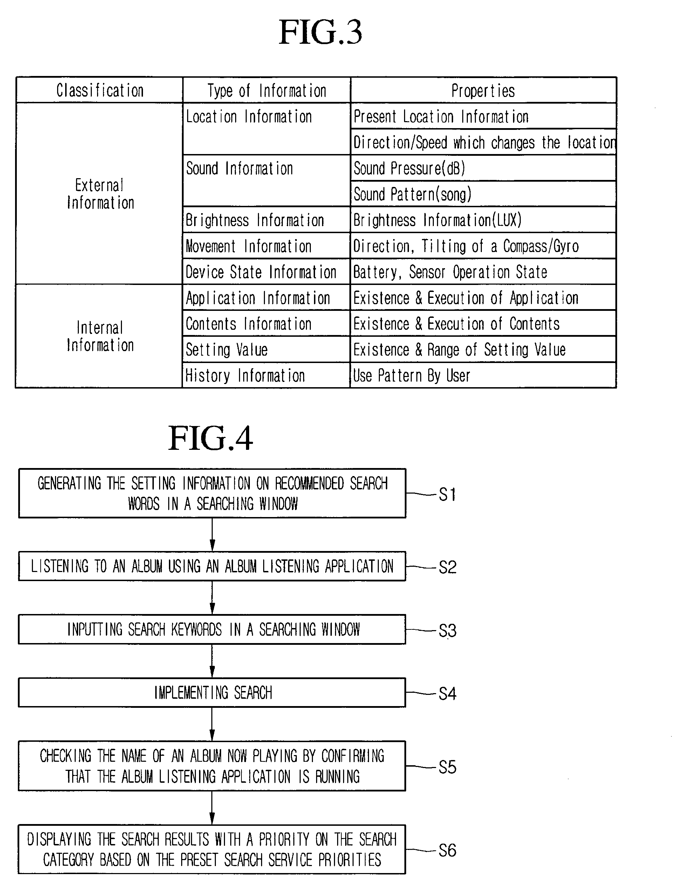

Next, Fig. 3 is a table illustrating situation recognition information according to an embodiment of the present invention. Referring to Fig. 3, the controller 180 can recognize or determine an external and internal situation of the mobile terminal 100 for the intelligent search service.

In more detail, as shown in Fig. 3, the controller 180 can use external information such as location information, sound information, brightness information, movement information, and device state information to recognize the external situation of the mobile terminal 100 (see also Fig. 1). Similarly, the controller 180 can use internal information such as application information, content information, setting value information, and history information to determine the internal situation of the mobile terminal.

Further, the location Information may include current location information and a direction or a speed at which a location is changed. Accordingly, the controller 180 can use information on a user's movement and direction for performing the intelligent search service.

In addition, the sound Information may include a sound pressure (dB) and a sound pattern (songs). The controller 180 can also distinguish if the mobile terminal is indoors or outdoors, whether the user in a crowd based on whether the external sound is soft or loud using the sound pressure (dB). The controller 180 can also distinguish between an irregular noise, a voice and music by determining a pattern of the sound through an analysis of waveforms of the sound.

Further, the controller 180 can identify brightness information (LUX) to distinguish indoors from outdoors or distinguish whether the mobile terminal 100 is under bright lighting or dim lighting. In addition, the movement information may include information on a direction or tilt of a compass or a gyro. For example, the controller 180 can determine whether the user is holding the mobile terminal 100 or has placed the mobile terminal 100 in a fixed position using the direction and tilt of the compass or the gyro.

Further, the device state information, for example, includes a state of an operation of a battery or sensors. Thus, the controller 180 can determine a hardware state of the terminal at a time of the search based on the device state information.

In addition, the application information may include information on whether an application has been installed or whether it is currently operating. Thus, the controller 180 can determine whether the application has been installed or is currently executed by using the application information. The controller 180 can also notice a user's use scenario depending on an operation of application.

Further, the content information may include information on whether a content exists or is currently executing or being used. Thus, the controller 180 can decide whether a content exists or is running by using the content information. The controller 180 can also classify the content which is usually used or stored.

In addition, the setting value information may include information on an existence of various setting values and a range thereof. The controller 180 can thus determine whether the setting value exists or a state of the terminal at the time of the search according to the range of the setting value.

The history information may include various use pattern information by the user. For example, the controller 180 can determine a frequently used service and a most recently used service using the use pattern per user information. In addition, the controller 180 can use other information such as a body, an activity, proximity, a date, and a time which is used for situation recognition.

Thus, the controller 180 can sense the internal and external situations of the terminal 100 and generate and provide the search result depending on the sensed internal and external situation. In more detail, the controller 180 can apply the search method in which the search result is prioritized by recognizing the terminal's internal and external situations through situation recognition. The controller 180 can also prioritize the search result in various ways.

The controller 180 can therefore perform the intelligent search service, which selects a search keyword based on the situation recognition information, and relocate a search category. For example, the controller 180 can preferentially provide a category with a high priority based on the situation recognition information among searchable information by the search keyword. The controller 180 can also use various information other than the search keyword. For example, the controller 180 can perform the intelligent search service through voice recognition and photo recognition.

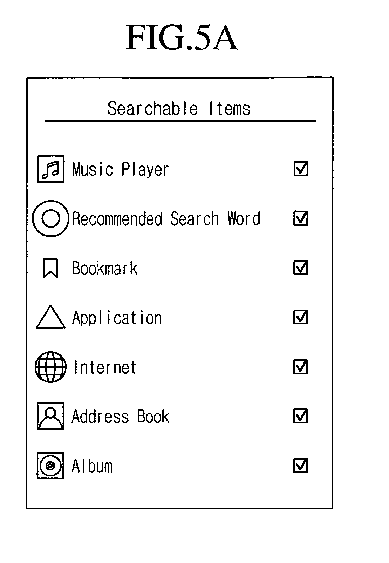

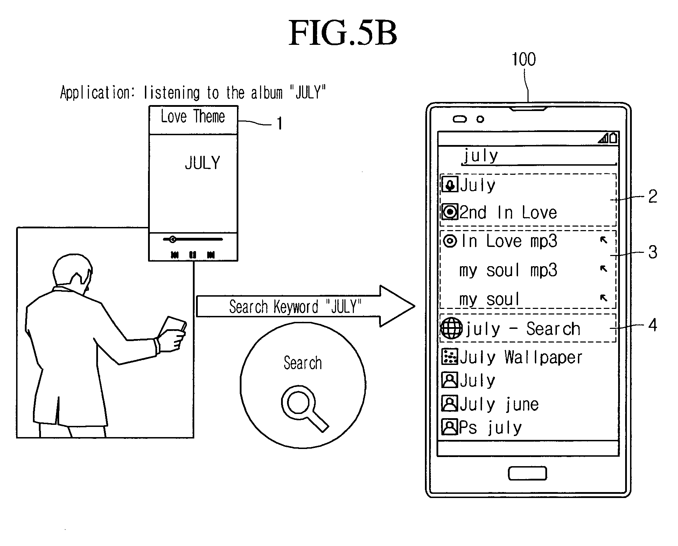

Next, Fig. 4 is a flow chart illustrating a method for performing an intelligent search service using situation recognition information according to an embodiment of the present invention, and Figs. 5A and 5B are display screens illustrating the intelligent search service according to an embodiment of the present invention.

Referring to Figs. 4, 5A and 5B, the mobile terminal 100 can perform the intelligent search service using a search keyword and situation recognition information. As shown, the user can input, select or enter recommended search keyword setting information in a search window for performing the intelligent search service (S1).

The setting information of the recommended search keyword may include searchable category information and category selection information to be included as a search object. For example, as shown in Fig. 5A, the user can select a selection field to select a particular category. Accordingly, the intelligent search service can be provided only for the selected categories.

Referring to Fig. 5B, the user is executing a music application and listening to the album (or song) 1 called 'JULY' (S2). Here, the user also inputs a search keyword 'JULY' in the search window (S3). The mobile terminal 100 then performs the intelligent search service (S4), and determines that the music application is running and the album being played is 'JULY' (S5).

Accordingly, the mobile terminal 100 displays the search result given a priority for searching 'JULY' (S6). For example, information about the singer of the album 'JULY' and the album search result 2 is given a first priority and displayed at the top of the mobile terminal 100. The sound source search result of 'JULY' 3, like an MP3 file, is given a second priority and displayed next to the first search result. Further, the Internet web search result of 'JULY' 4 is given the next priority and displayed.

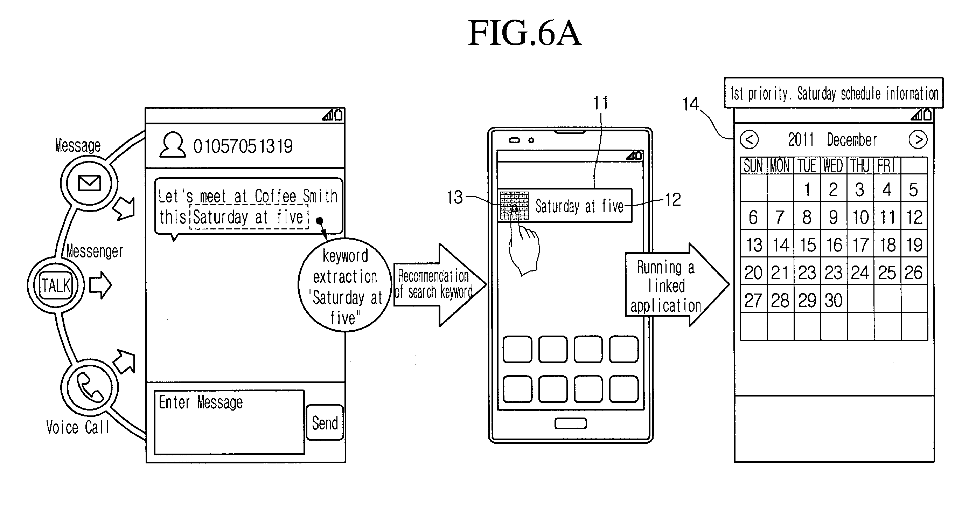

Next, Figs. 6A to 6F are display screens illustrating a method for performing an intelligent search service using situation recognition information according to another embodiment of the present invention. Referring to Fig. 6A, the mobile terminal 100 can implement the intelligent search service using situation recognition information in a communication context and display a time-related search keyword as a recommended search keyword.

In more detail, the memory 160 of the mobile terminal 100 can store at least some part of text sent and received in the communication context, for example. When the search is requested while or after running a communication application, the controller 180 can extract some words from the content generated and display the words as the recommended search keyword in the search window.

The mobile terminal 100 can also switch to a home screen in accordance with a user's request when running an arbitrary communication application. When switching to the home screen, the mobile terminal 100 can display arbitrary time-related words as a recommended search keyword 12 in the search window 11 of the home screen. The recommended search keyword 12 displayed on the home screen search window 11 are selected from among time-related words that are included in the communication contexts when the communication application has been run.

The mobile terminal 100 can also display the search result found based on the time situation information when switching to the home screen. Further, the mobile terminal 100 can display the intelligent search service results in the search window 11 of the home screen by search category. The mobile terminal 100 can also display the identifiers 13 which represent a search category in displaying intelligent search service results in the search window of the home screen. An identifier may be a form of an icon, text or specific color.

The mobile terminal 100 can also provide a recommended search keyword regarding time such as days, dates, and special or anniversary days in the context of using messages, messengers or phones and display the time-related category search result with first priority.

For example, an application run just before a screen switching operation occurs may be a message mode application. When the text "Let's meet at Coffee Smith at five this Saturday" is input in the pertinent message, the mobile terminal 100 can select time information of "at five this Saturday" as the recommended search keyword by extracting the key from the input text message, and display "at five this Saturday" as the recommended search keyword 12 in the search window 11.

The controller 180 can also display the identifier 13 representing the category with the first priority in the search window 11. When the user clicks or selects the identifier 13 for displaying search result on the pertinent category, the mobile terminal 100 can start an application linked to the pertinent category and display the Saturday schedule information classified with the first priority.

The user can also select an input such as a home key to perform the determining of the internal or external situation, extracting the keyword and displaying the extracted keyword in the search window.

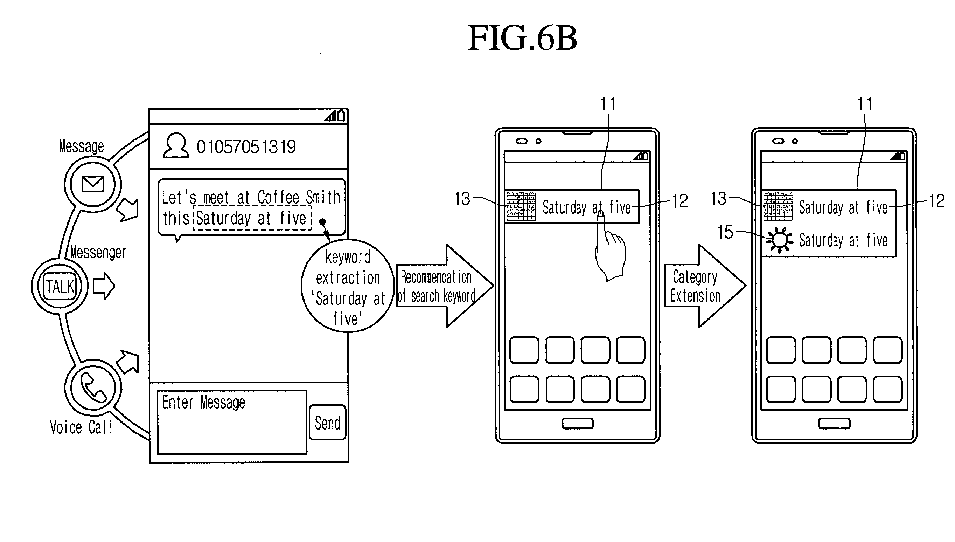

Meanwhile, the user can perform an input operation such as a click input in the search window 11 to request the search result on the category with the next priority be displayed. In more detail, referring Fig. 6B, when the user performs a click input in the search window 11, the mobile terminal 100 can expand the categories with the second priority of intelligent search service together with the category with the first priority in the search window 11.

When the user performs an input operation such as a click input regarding the recommended search keyword about the first-priority category, the mobile terminal 100 can run an application linked to the pertinent category and display the Saturday schedule information which is classified as a first priority.

Meanwhile, when the user performs an input operation such as a click input regarding the recommended search keyword about the second-priority category, the mobile terminal 100 can run an application linked to the pertinent category and display the Saturday weather information which is classified as a second priority. Here, the linked application may be a dedicated weather information-application, which provides the information on weather only, or it may be an Internet browsing application accessible to the websites which provides the information on weather on the web.

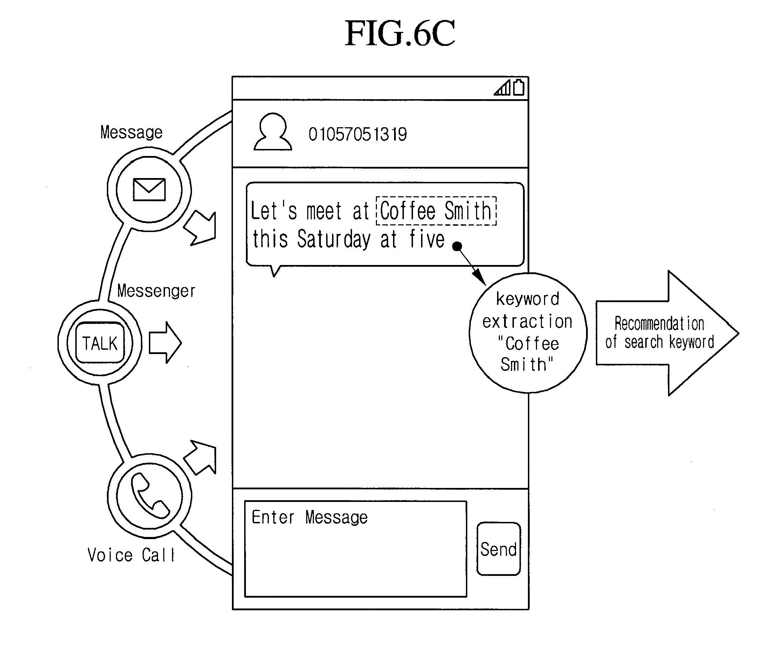

Next, referring to Fig. 6C, the mobile terminal 100 can implement the intelligent search service using situation recognition information related to places. That is, the mobile terminal 100 can implement the intelligent search service based on a place situation in the communication context. That is, the mobile terminal 100 can provide a recommended search keyword regarding the place used in the messenger or phone applications and display the place-related category search result with the first priority.

For example, a current mode just before a screen switching process occurs may be a message mode. When the text "Let's meet at Coffee Smith at five this Saturday" is input in the last message and a screen switching process occurs, the mobile terminal 100 can select the place information of "Coffee Smith" as the recommended search keyword and extract the keyword from the input text message content, and display "Coffee Smith" as the recommended search keyword in the search window.

In addition, the mobile terminal 100 can determine the map location information category of "Coffee Smith" as the first priority search category for "Coffee Smith," and the place review information category of "Coffee Smith" in the Web content as the second priority search category.

Accordingly, the mobile terminal 100 can display the recommended search keyword and the identifiers representing the category together in the search window. The mobile terminal 100 can also arrange several categories by priority and display them with the identifiers in the search window. In addition, when the recommended search keyword relevant to an arbitrary category is selected, the search result of the pertinent category is displayed on the screen.

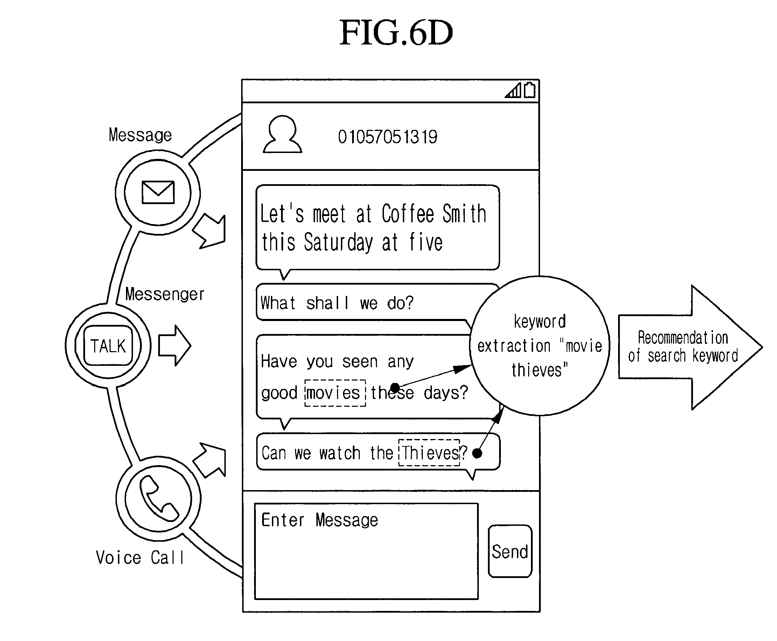

Referring to Fig. 6D, the mobile terminal 100 can implement the intelligent search service using situation recognition information which extracts some words or the combination of the words from the content created when running or executing an application, whose words are related to one or more of the followings: time, place or topic. The mobile terminal 100 then displays the words as a search keyword in the search window.

Further, the mobile terminal 100 can implement the intelligent search service based on word combinations in the communication context. In particular, the mobile terminal 100 can decide a recommended search keyword using word combinations in the context of the use of messages, messengers or phones and display the search result of the category which has a high-level relation with each keyword with the first priority.

For example, a current implementation mode just before a screen switching process can be a message mode. In this example, the communication text "Have you seen any good movies these days?" and "Can we watch the Thieves?" are input in the last message. Then, the screen switching process occurs. Accordingly, the mobile terminal 100 can select a word-combination information including "movie thieves" as a recommended search keyword and display the "movie thieves" as the recommended search keyword in the search window.

In addition, the mobile terminal 100 can decide the movie information category of "thieves" as the first priority search category for "movie thieves," the web search result information category of "thieves" in the Web content as the second priority, and the information on the other recent movies as the third priority.

Thus, the mobile terminal 100 can sense the internal or external situation of the mobile terminal 100, set an output priority of displaying the recommended search keyword in the search window, depending on some of the extracted words and the internal or external situation of the sensed terminal, and implement the display of recommended search keyword in the search window according to a priority.

Accordingly, the mobile terminal 100 can display the recommended search keyword and the identifiers representing categories together in the search window, and also arrange several categories by priority and display them with the identifiers in the search window. In addition, when the recommended search keyword relevant to an arbitrary category is selected, the search result of the pertinent category is displayed on screen.

Further, the mobile terminal 100 can run an application linked to the category relevant to the pertinent identifier when the identifier is clicked or selected. In addition, the mobile terminal 100 can display the search result linked to the category relevant to the pertinent identifier when the identifier is selected. The mobile terminal 100 can also display the identifier relevant to the category with the first priority from among the decided output prioritized category, along with the recommended search keyword, in the search window.

When requested, the mobile terminal 100 can display the search result for the second priority category along with the recommend words in the above search window by priority. The mobile terminal 100 can also display the pertinent identifiers relevant to the category with the next priority together in response to the displayed category search result in the search window as well.

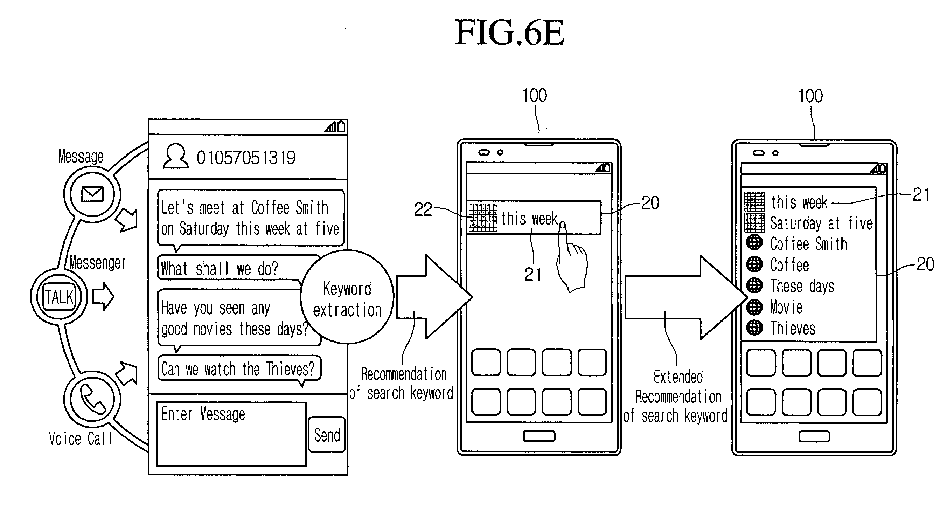

Referring to Fig. 6E, the mobile terminal 100 can implement the intelligent search service using situation recognition information by performing a recommended search keyword search extended by the combination of words.

In more detail, the mobile terminal 100 can implement an extended intelligent search service based on the word combination in the communication context. That is, the mobile terminal 100 can decide a recommended search keyword by word combinations in the context of the use of messages, messengers or phones and display the search result of the category which has a high-level relation with each keyword with a first priority.

For example, an implementation mode just before a screen switching process occurs may be a message mode. The communications "Have you seen any good movies these days?" and "Can we watch the Thieves?" are input in the last message, and then a screen switching process occurs. The mobile terminal 100 can then extract the following words "this week, Saturday at five, Coffee Smith, these days, movie, thieves" as a recommended search keyword from input text message content.

The mobile terminal 100 can then decide "this week" as the recommended search keyword with a first priority 21 from among the recommended search keyword. The mobile terminal 100 can display the recommended search keyword with the first priority 21, along with the identifier 22 representing the category of the pertinent search keyword in the search window 20.

Here, the identifier 22 represents the schedule information category. When the identifier is selected, an application providing schedule information may be run. Meanwhile, when the recommended search keyword 21 "this week" has been displayed in the search window 20 and the user selects the search window 20, the region of the search window is extended.

The recommended search keyword, "this week, Saturday at five, Coffee Smith, these days, movie, thieves", which are extracted from input text message content, are arranged in order and displayed in the search window 20 of the extended region. Here, the identifiers representing the category of each recommended search keyword may also be displayed.

When an arbitrary word is selected from among the words displayed in the search window of the extended region, the application linked to the pertinent category for the relevant words is executed and the appropriate display screen is provided. For example, when the word "Thieves" is selected from among the displayed words, the Internet browsing application linked to the pertinent category can be executed and the web search information on "thieves" is provided.

Meanwhile, according to another embodiment of the present invention, among the web search information, the movie information search and even the information on another recent movie search may be provided.

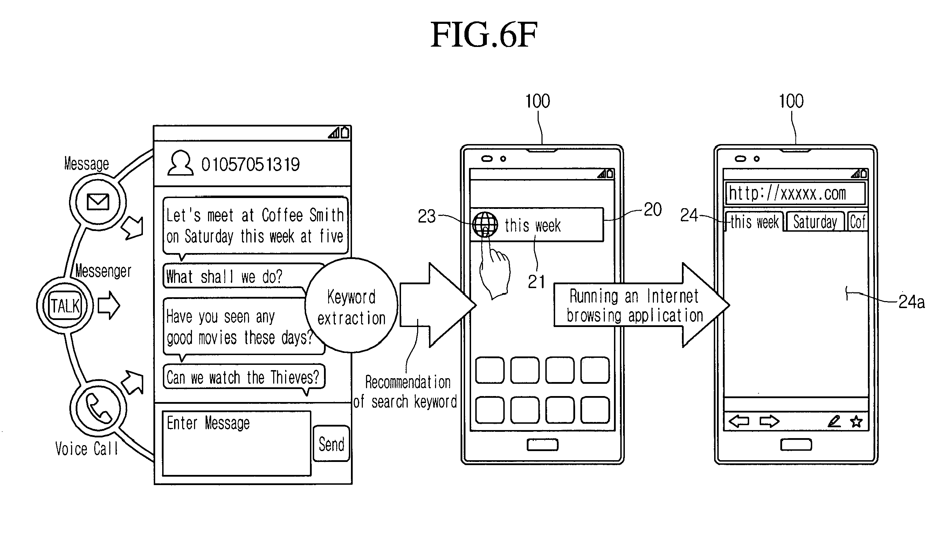

Referring to Fig. 6F, the mobile terminal 100 can implement the intelligent search service using situation recognition information which performs a recommended search keyword search extended by the combination of words. In more detail, the mobile terminal 100 can implement an extended intelligent search service based on the word combination in the communication context. In particular, the mobile terminal 100 can decide a recommended search keyword by word combinations in the context of the use of messages, messengers or phones and display the search result of the category, which has a high-level relation with each keyword with the first priority.

For example, an implementation mode just before a screen switching process occurs may be a message mode. The communications "Have you seen any good movies these days?" and "Can we watch the Thieves?" are input in the last message, and then a screen switching process occurs. The mobile terminal 100 can extract the following words "this week, Saturday at five, Coffee Smith, these days, movie, thieves" as the recommended search keywords from input text message content.

The mobile terminal 100 can decide "this week" as the recommended search keyword with the first priority 21 from among the recommended search keyword. The mobile terminal 100 can also display the recommended search keyword with the first priority 21, along with the identifier 23 representing the category of the pertinent search keyword in the search window 20. Here, the identifier 23 may identify an Internet browsing application. When the identifier 23 is selected, the Internet browsing application is executed.

When the Internet browsing application is executed, the recommended search keyword "this week, Saturday at five, Coffee Smith, these days, movie, thieves," which are extracted by from the input text message content, may be arranged from the left in order of priority by using Internet tab 24 and be displayed. Whenever the Internet tab 24 is selected, the Internet search result for each word may be displayed on screen 24a.

In addition, the above screen switching process may be performed by the user pressing a "home" key on the terminal to switch to the home screen including the search results. However, the user may also designate a hot key, volume key, touch icon, etc. to invoke the search results be found and displayed. The user may also shake the terminal in a predetermined manner to begin execution of the search process. Other methods may also be performed such as voice commands, proximity or regular touch actions, etc.

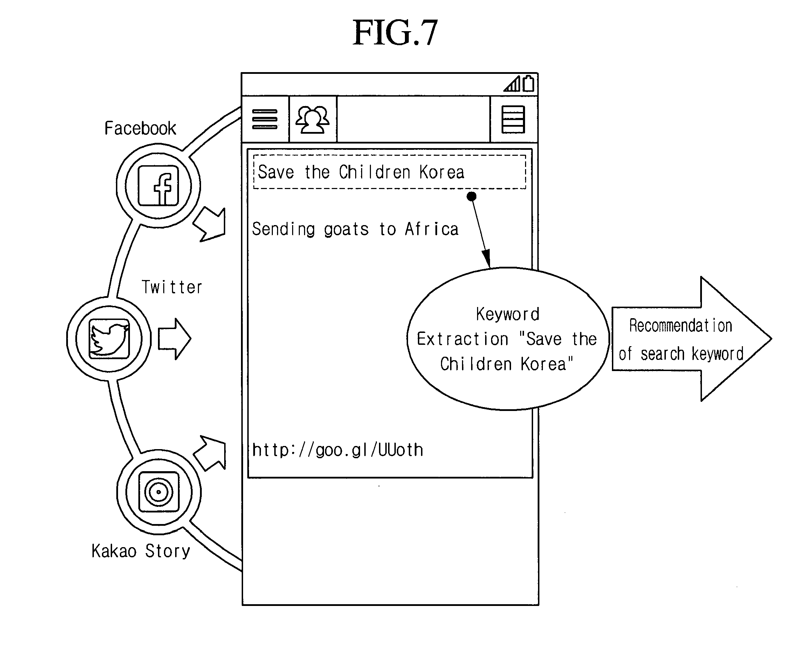

Next, Fig. 7 is a display screen illustrating a method for performing an intelligent search service using situation recognition information in a social network context according to an embodiment of the present invention. Referring to Fig. 7, the mobile terminal 100 can switch to a home screen in accordance with a user's request when running a social network communication application. When switching to the home screen, the mobile terminal 100 can provide the recommended search keyword using a follower or friend name in the search window and display the search result such as people, groups and news, in the search result category with the first priority.

In particular, the mobile terminal 100 can implement the intelligent search service using the social network use context. Further, the mobile terminal 100, for example, can provide the recommended results using the follower or friend name in the context of using Facebook, Twitter, or Kakao Story, and display the search result such as people, groups and news, in the search result category with the first priority.

For example, an implementation mode just before a screen switching process to the home screen movement occurs may be a social network use mode such as Facebook, Twitter or Kakao Story. A screen switching process occurs when the user has read a post by friend "Save the Children Korea" in a Facebook interaction. The mobile terminal 100 can select friend information of "Save the Children" as the recommended search keyword from the displayed Facebook post content, and display the selected words "Save the Children" in the search window.

Here, the mobile terminal 100 can decide the homepage information category of "Save the Children" as the first priority search category for "Save the Children," the news information category of "Save the Children" as the second priority, and the information on the other recent movies as the third priority.

Accordingly, the mobile terminal 100 can display the recommended search keyword and the identifiers representing categories together in the search window, and arrange several categories by priority and display them with the identifiers in the search window. In addition, when the recommended search keyword relevant to an arbitrary category is selected, the search result of the pertinent category is displayed on the screen.

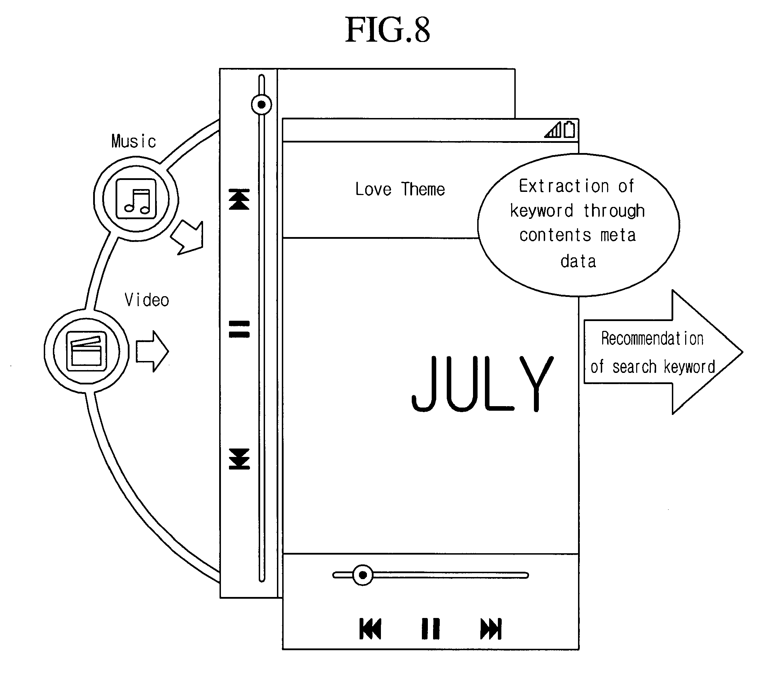

Next, Fig. 8 is a display screen illustrating a method for performing an intelligent search service using a content metadata according to an embodiment of the present invention. Referring to Fig. 8, the mobile terminal 100 can provide the recommended results by using the content information in the context of reproducing multimedia content such as music and video, and display the search result with the first priority.

The mobile terminal 100 can switch to a home screen in accordance with a user's request in the context of reproducing multimedia content such as music and video. When switching to the home screen, the mobile terminal 100 can provide the recommended search keyword by implementing the intelligent search service using content meta data, and display the search result such as album information, songs, and webs in the search result category with the first priority.

For example, an implementation mode just before a screen switching process occurs may be a mode for listening to music. In the context of reproducing the album 'JULY' by the user when listening to the music, a screen switching process occurs. The mobile terminal 100 can then select the search keyword "JULY" as the recommended search keyword using meta data of the content, and display the selected word "JULY" as the recommended search keyword in the search window.

Here, the mobile terminal 100 can decide the album information category of "JULY" as the first priority search category for "JULY," the song information category of "JULY" as the second priority, and the web search result category of "JULY" as the third priority.

Accordingly, the mobile terminal 100 can display the recommended search keyword and the identifiers representing categories together in the search window, and arrange several categories by priorities and display them with the identifiers in the search window. In addition, when the recommended search keyword relevant to an arbitrary category is selected, the search result of the pertinent category is displayed on screen.

For example, when there is a category selection input from a user, the mobile terminal 100 can search for and display the album information of "JULY" which is the first priority, the song information of "JULY" which is the second priority, or the web search information of "JULY" which is the third priority.

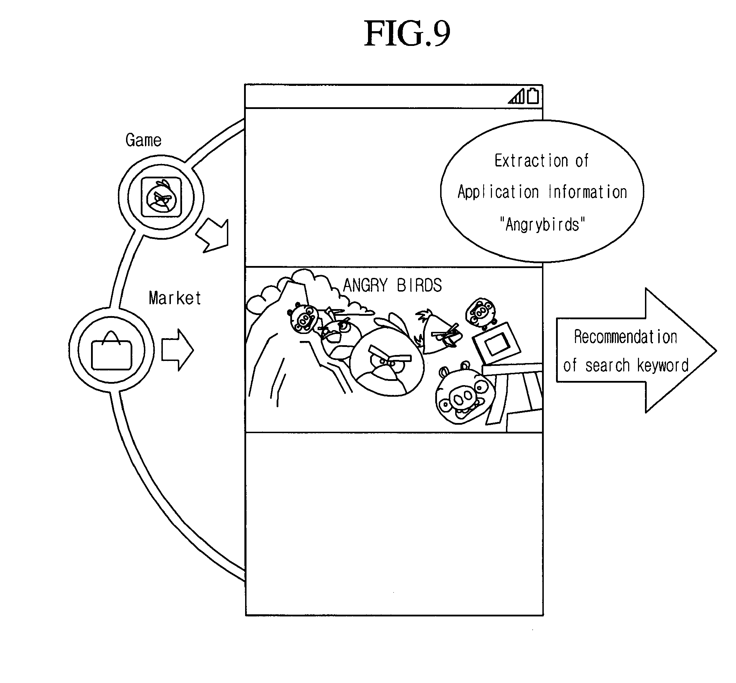

Next, Fig. 9 is a display screen illustrating a method for performing an intelligent search service using a game application and a market data according to an embodiment of the present invention. Referring to Fig. 9, the mobile terminal 100 can provide the recommended search keyword by application name in the context of playing games, and introduce through market meta data the apps in which the user may have interest.

That is, the mobile terminal 100 can implement the intelligent search service using game applications and market data. The mobile terminal 100 can also switch to the home screen in accordance with a user's request in the use context of games and markets. When switching to the home screen, the mobile terminal 100 can provide the recommended search keyword by extracting the application information in the use context of games and markets, and display the game application in the search result category with the first priority.

For example, an implementation mode just before a screen switching process occurs may be a playing game mode. In the context of playing the game 'Angry birds' by the user in the last playing game mode, a screen switching process occurs. The mobile terminal 100 can select the search keyword "Angry birds" as the recommended search keyword in the playing game mode, and display the selected word "Angry birds" in the search window.

Therefore, the mobile terminal 100 can decide the market information category of "Angry birds" as the first priority search category for "Angry birds," and the web information category of "Angry birds" as the second priority.

Accordingly, the mobile terminal 100 can display the recommended search keyword and the identifiers representing category together in the search window, and arrange several categories by priorities and display them with the identifiers in the search window. In addition, when the recommended search keyword relevant to an arbitrary category is selected, the search result of the pertinent category is displayed on the screen.

For example, when there is a category selection input from a user, the mobile terminal 100 can search for and display the market information of "Angry birds" which is the first priority, or the web information of "Angry birds" which is the second priority.

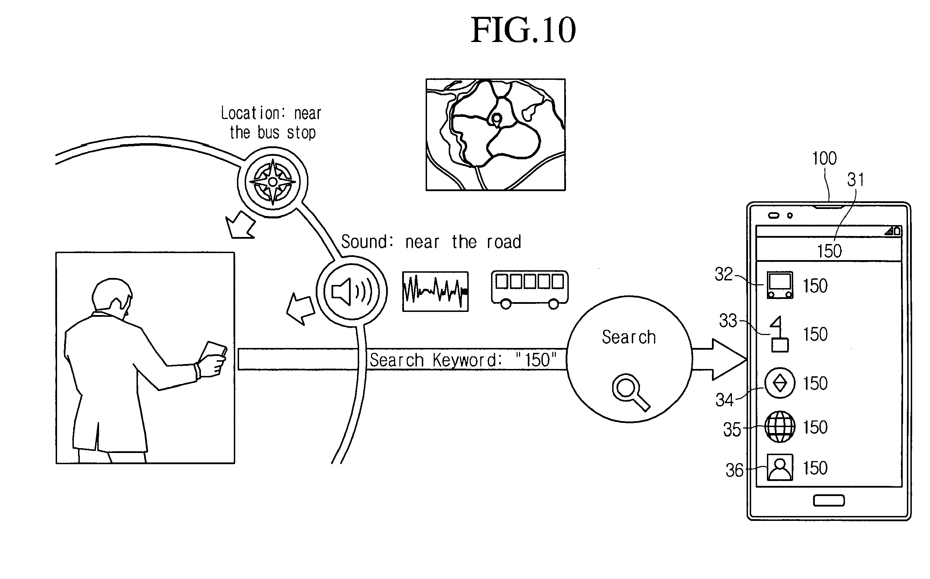

Next, Fig. 10 is an overview illustrating a method for performing an intelligent search service using spatial situation recognition information according to an embodiment of the present invention. Referring to Fig. 10, the mobile terminal 100 can implement the intelligent search service using a search keyword and situation recognition information.

In particular, the mobile terminal 100 can recognize through a location information provision module that a user's location is near a bus stop, or recognize by sound input through a voice process module that the user's location is near the road. In this situation, '150' as search keyword is input in the search window 31 and the intelligent search service is implemented.

The mobile terminal 100 can implement the confirmation of the bus stop by using location information and maps, and check the type of location through noise or sound pressure. Further, using the search keyword '150' and the category 'traffic information' as the conditions for search, the mobile terminal 100 can display the search result such as the '150'-related traffic information, with the first priority.

Therefore, the user can obtain information about public transportation including the bus number 150. Similarly, the mobile terminal 100 can display the traffic information based on situation recognition information with the first priority.

Here, the mobile terminal 100 can display on the result screen the bus information category 32 of "150" as the first priority search category for "150," the address information category 33 of "150" as the second priority, the map information category 34 for "150" as the third category, the web search information category 35 for "150" as the fourth category, and the address book information category 36 for "150" as the fifth category.

Accordingly, the mobile terminal 100 can display the search keyword "150" and the identifiers representing category together in the search window, and arrange several categories by priorities and display them with the identifiers in the search window. In addition, when the search keyword relevant to an arbitrary category is selected, the detailed web information or the pertinent application execution screen which is relevant to the search result of the pertinent category may be provided.

For example, when there is a category selection input from a user, the mobile terminal 100 can display the web information or application execution screen of the bus information category 32 for "150" which is the first priority, the web information or application execution screen of the address information category 33 for "150" which is the second priority, the web information or application execution screen of the map information category 34 for "150" which is the third priority, the web information or application execution screen of the web search information category 35 for "150" which is the first priority, or it may search for and display the address book information 36 for "150."

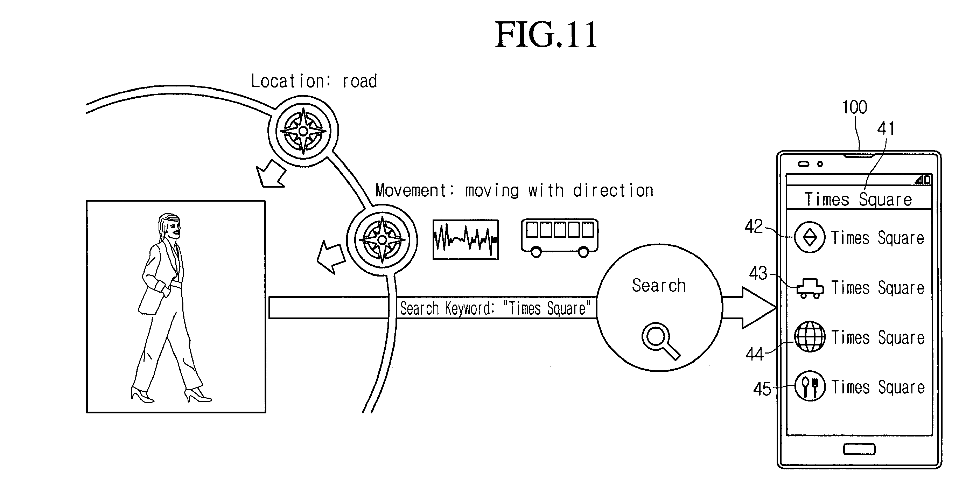

Next, Fig. 11 is an overview illustrating a method for performing an intelligent search service using spatial situation recognition information according to another embodiment of the present invention. Referring to Fig. 11, the mobile terminal 100 implements the intelligent search service using a search keyword and situation recognition information.

In more detail, the mobile terminal 100 can recognize through a location information provision module that a user's location is near the road, or through the location information provision module that the user's location is moving in a certain direction. In this example, 'Times Square' as a search keyword is input in the search window 41 and the intelligent search service can search for this keyword.

The mobile terminal 100 can confirm the road the user is on by using location information, and confirm the information that the location is by the road. Based on this situation recognition information, the mobile terminal 100 can display the map information of "Times Square" with the first priority. Thus, the user can obtain map information of "Times Square."

In addition, the mobile terminal 100 can display the map information category 42 of "Times Square" as the first priority search category for "Times Square," the traffic guide information category 43 of "Times Square" as the second priority, the web search information category 44 for "Times Square" as the third category, and the neighboring restaurant information category 45 for "Times Square" as the fourth category.

Accordingly, the mobile terminal 100 can display the search keyword "Times Square" 41 and the identifiers representing categories together in the search window, and arrange and display several categories by priorities with the identifiers. In addition, when the search keyword relevant to an arbitrary category is selected, the web information or the application execution screen relevant to the category can be provided.

For example, when there is a category selection input from a user, the mobile terminal 100 can display the web information or application execution screen of the map information category 42 for "Times Square" which is the first priority, the web information or application execution screen of the traffic guide information category 43 for "Times Square" which is the second priority, the web information or application execution screen of the web search information category 44 for "Times Square" which is the third priority, or the web information or application execution screen of the neighboring restaurant information category 45 for "Times Square" which is the first priority.

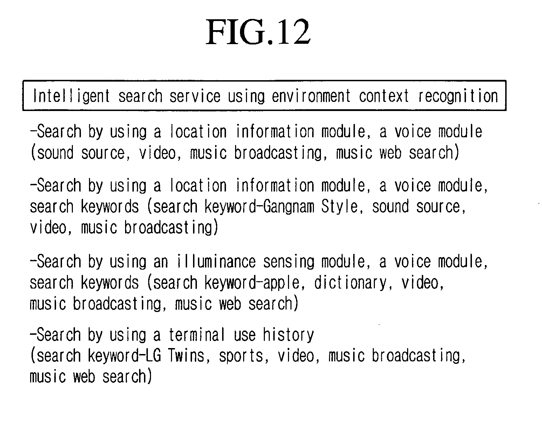

Next, Fig. 12 is an overview illustrating a method for performing an intelligent search service using environmental situation recognition information according to an embodiment of the present invention. Referring to Fig. 12, the mobile terminal 100 can implement the intelligent search service by recognizing the environment context through a location information provision module and a voice module.

In particular, the mobile terminal 100 can recognize that a user's location is near a nightclub street using a location information provision module or using the rhythmical sound received by a voice module. In this situation, the mobile terminal 100 can implement the intelligent search service even without inputting any special search keyword.

In addition, the mobile terminal 100 can display searched music information as a primary search result in the default search window without inputting any special search keyword when the sound pressure input through a voice module as well as a location information module reaches over a certain decibels (dB) and the sound pattern belongs to a song.

Here, the mobile terminal 100 can decide the sound source search information category as the first priority search category, the video information provision category as the second priority search category, the music broadcasting information category as the third priority search category, or the music web search information category as the fourth priority search category.

Accordingly, the mobile terminal 100 can display the search keyword "Times Square" and the identifiers representing category together in the search window, and arrange several categories by priorities and display them with the identifiers in the search window. In addition, when the search keyword relevant to an arbitrary category is selected, the web information or the application execution screen relevant to the category may be provided.

For example, when there is a category selection input from a user, the mobile terminal 100 can display the web information or application execution screen of the sound source search information category as the first priority, the video information provision category as the second priority, the music broadcasting information category as the third priority, or the music web search information category as the fourth priority.

In addition, the mobile terminal 100 can implement the intelligent search service by receiving the input search keyword and recognizing the environment context through a location information provision module and a voice module. For example, the mobile terminal 100 can recognize that a user's location is near the nightclub street using a location information provision module, or using the rhythmical sound input by a voice module. In this situation, 'Gangnam Style' corresponding to the sound input as a search keyword is input in the search window and the intelligent search service is implemented.

Further, the mobile terminal 100 can display the music information based on the input search keyword with the first priority when the sound pressure which is input through a voice module as well as a location information module reaches over a certain decibels (dB) and the sound pattern belongs to a song.

Here, the mobile terminal 100 can decide the sound source search information category as the first priority search category for "Gangnam Style," the video information provision category as the second priority search category, the music broadcasting information category as the third priority search category, or the music web search information category as the fourth priority search category.

Accordingly, the mobile terminal 100 can display the search keyword "Gangnam Style" and the identifiers representing categories together in the search window, and arrange several categories by priorities and display them with the identifiers in the search window. In addition, when the search keyword relevant to an arbitrary category is selected, the web information or the application execution screen relevant to the category may be provided.

In addition, the mobile terminal 100 can implement the intelligent search service by receiving the input search keyword and recognizing the environment context through a luminance sensing module and a voice module. For example, the mobile terminal 100 can recognize through a luminance sensing module that the indoor space around the terminal is bright, or through a voice module that it is silent. In addition, the mobile terminal 100 can recognize through a location information module that the mobile terminal 100 is deactivated. In this situation, 'apple' as search keyword is input in the search window and the intelligent search service is implemented.

In addition, the mobile terminal 100 can check the brightness level through brightness information (LUX), the type of the place where the mobile terminal is moving through noise or sound pressure, or the state how the mobile terminal is lying based on the movement of the gyro sensor. In this situation, the mobile terminal 100 can implement a dictionary category based on the input search keyword and display the information on "apple" from the dictionary with the first priority.

Here, the mobile terminal 100 can decide the dictionary information category as the first priority search category for "apple", the video information provision category as the second priority search category, the music broadcasting information category as the third priority search category, or the music web search information category as the fourth priority search category, and then, it may display on the result screen by priority.

Accordingly, the mobile terminal 100 can display the search keyword "apple" and the identifiers representing the category together, arrange several categories by priorities and display them with the identifiers on the result screen. In addition, when the search keyword relevant to an arbitrary category is selected, the web information or the application execution screen relevant to the category can be provided.

In addition, the mobile terminal 100 can implement the intelligent search service by recognizing the terminal's use history context and display the search result of the frequently searched category with the first priority.

When the use history is focused on only one category such as sports, news, people, and images, the mobile terminal 100 can implement the intelligent search service based on the last use history. For example, the last use history may be where several results on the latest baseball game have been searched. In this situation, when 'LG Twins' as the search keyword is input in the search window 31, the mobile terminal 100 can display the results of the LG Twins' baseball games with the first priority.

Here, the mobile terminal 100 can decide the sports information category as the first priority search category for "LG Twins," the video information provision category as the second priority search category, the music broadcasting information category as the third priority search category, or the music web search information category as the fourth priority search category. Then, the controller 180 can display the category on the result screen by priority.

Accordingly, the mobile terminal 100 can display the search keyword "LG Twins" and the identifiers representing the categories together on the result screen, arrange several categories by priorities and display them with the identifiers on the result screen. In addition, when the search keyword relevant to an arbitrary category is selected, the web information or the application execution screen relevant to the category may be provided.

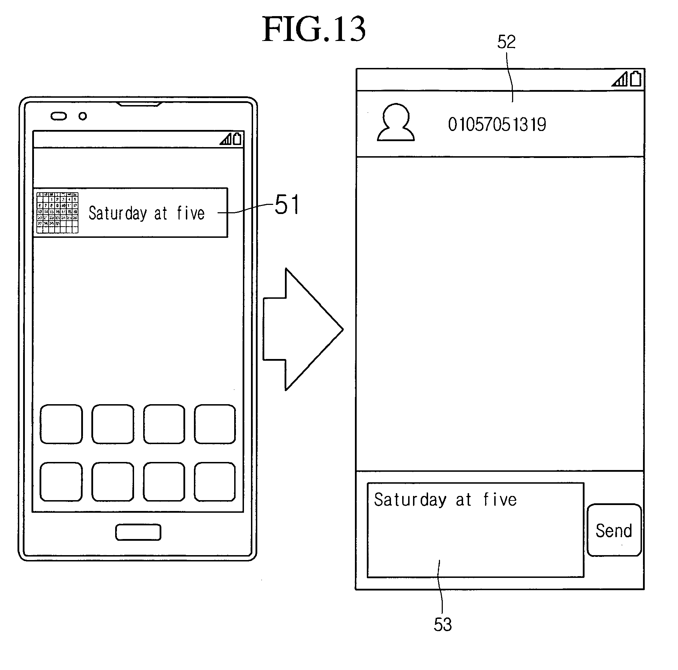

Next, Fig. 13 includes display screens illustrating a method for performing an intelligent search service according to another embodiment of the present invention. Referring to Fig. 13, the mobile terminal 100 can temporarily record in the memory 160 the text content generated for the intelligent search service by executing search applications and display them on the relevant screen in executing another arbitrary application after the search application.

Thus, the user can use the text content obtained by the search result without having to copy and paste in other follow-up applications. In addition, the memory 160 can temporarily store text content input by the user during execution of a search application. Furthermore, temporarily storing means the content previously stored in the memory is replaced by new text content.

The controller 180 can also execute a search application, receive the input of arbitrary text content from the user for search while the search application is executing and record the information in the memory 160. In addition, the controller 180 can execute an arbitrary application after completing the execution of the search application. Further, the controller 180 can execute arbitrary applications while the search application is executing or in multi-execution mode.

In these situations, the controller 180 automatically reads the text content stored in the memory 160 without a request from the user and inputs the text in a text input window. Thus, the controller 180 can input the text content recorded in the memory 160 when executing the search application in the last step.

When there is a request to switch to the execution screen of another application during or after executing a search application, the controller 180 can display at least some of the text content generated by executing the search application so they can be edited on the execution screen of another application which runs after the search application.

For example, the controller 180 can display the last input word out of the text content input in the search window so the text content can be edited on the execution screen of another application executed after the search application. Here, another application includes text messages, music, web pages, address books, schedules, memos, pictures, videos, SNS, and map applications. However, the present invention is not limited to these applications, and other applications executable after the search application are included.

Therefore, with reference to Fig. 13, when there is a request to switch to the execution screen 52 corresponding to a text message application after searching arbitrary words 51 in the search window of the search application, the controller 180 can display the arbitrary words in the text message composing window 53. The words can then be edited in the window 53.

Therefore, the user does not have to copy and paste the words input in the search application into the other application. The user can then send a text message using the search words. The user can also edit the search words input into the text message composing window 53.

In another example, when the user switches an SNS application after searching arbitrary words, the controller 180 can display the arbitrary words in the SNS text composing window. The words can then be edited. Thus, the user does not have to perform a copy and paste function.

The user can also use the SNS application to chat with a friend while also executing a search application, inputting an arbitrary word in the search window of the search application, and checking the search result. The word or words input in the search window of the search application is then automatically copied and displayed in the SNS text composing window.

In addition, the word displayed in the SNS text composing window can be edited, and thus the user can continue to compose SNS texts for chatting with a friend by using the displayed word. Therefore, the controller 180 can extract and display one or two nouns out of the text content input in the search window of the search application and then display the search words in another application executed after the search application.

In another example, the controller 180 can extract and display a sentence out of the text content input in the search window of the search application so that the sentence can be edited on the execution screen of another application executed after the search application. For example, the controller 180 can extract and display nouns out of the text content input in the search window so the extracted nouns are editable and arranged on the execution screen of another application executed after the search application.

Meanwhile, the controller 180 can display at least some of the text content of the search results on the execution screen of another application and in which the content can be edited. For example, the controller 180 can display the last input word of the text content of the search results on the execution screen of another application.

In another example, the controller 180 can extract and display one or two nouns of the text content belonging to the results of the search application on the execution screen of another application. The last input word and nouns can then be edited.

In addition, the controller 180 can extract and display a sentence of the text content of the search application so that the extracted sentence is editable on the execution screen of another application. For example, the controller 180 can extract and display nouns of the text content belonging to the search results so that the extracted nouns are editable and arranged on the execution screen of another application.

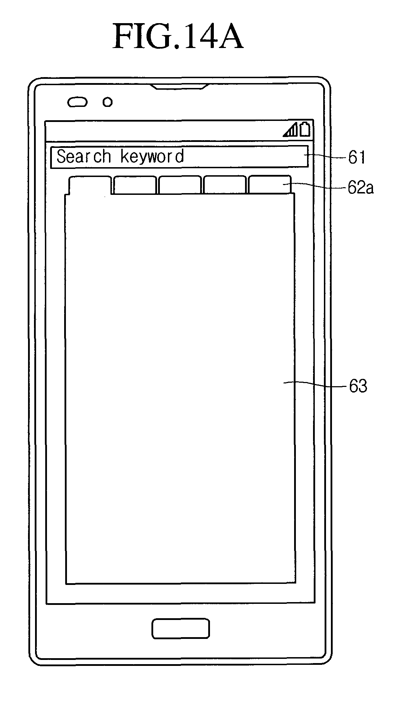

Next, Figs. 14A to 14D include display screens illustrating a method for performing an intelligent search service according to another embodiment of the present invention. Referring to Fig. 14A, the mobile terminal 100 can display a recommended search keyword by priority as to the words input in the search window 61 using plural display tabs 62a.

The controller 180 can also display the identifiers identifying the category of the search result displayed in the plural display tabs 62a, together with the respective display tabs. Whenever a display tab 62a is selected, the web information or the application execution screen 63 relevant to the category is displayed. Further, the identifiers identifying the category of the search result can be displayed as well on each execution screen 63.

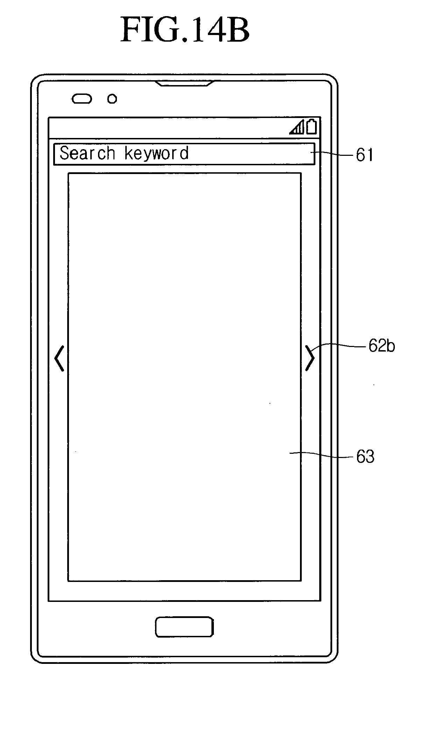

Referring to Fig. 14B, the mobile terminal 100 can display a recommended search keyword by priority as to the keyword input in the search window 61 using a left and right movable icon 62b. Further, the controller 180 can display the category identifier together with the left and right movable icon 62b. Thus, whenever the left and right movable icon 62b is selected, the web information or the application execution screen 63 relevant to the category is displayed. The category identifier of the search result may also be displayed as well on each execution screen 63.

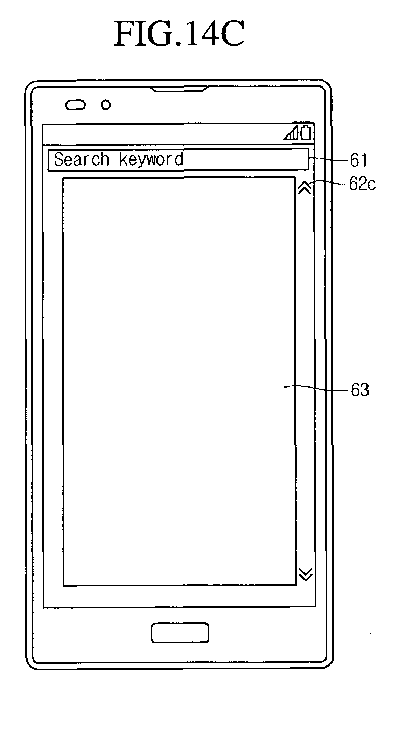

Referring to Fig. 14C, the mobile terminal 100 can display a recommended search keyword by priority as to the search keyword input in the search window 61 using a vertical scroll icon 62c. The controller 180 can also display the category identifier together with the vertical scroll icon 62c. Whenever the vertical scroll icon 62b is selected, the web information or the application execution screen 63 relevant to the category is displayed. The category identifier may also be displayed as well on each execution screen 63.

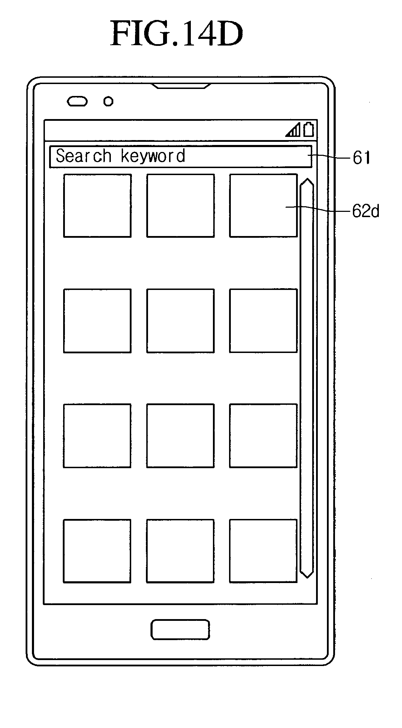

Referring to Fig. 14D, the mobile terminal 100 can display a recommended search keyword by priority as to the words input in the search window 61 by arranging plural folders 62d as a matrix. In addition, the controller 180 can display the category identifiers together with the respective folders 62d. Whenever each folder 62d is selected, the web information or the application execution screen 63 relevant to the category is displayed. The category identifier may be displayed as well on each execution screen 63.

According to an embodiment of the present invention, the above described method may be implemented in a processor readable code on a medium which records a program. Examples of a processor readable medium include ROM, RAM, CD-ROMs, magnetic tapes, floppy disks, and optical data storage devices, and the processor readable medium may also be implemented via transmission through internet.

The present invention encompasses various modifications to each of the examples and embodiments discussed herein. According to the invention, one or more features described above in one embodiment or example can be equally applied to another embodiment or example described above. The features of one or more embodiments or examples described above can be combined into each of the embodiments or examples described above. Any full or partial combination of one or more embodiment or examples of the invention is also part of the invention.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A terminal (100), comprising:
a wireless communication unit (110) configured to wirelessly communicate with at least one other terminal;
a display (151) configured to display a search window for inputting a keyword; and
a controller (180) to:
search for the input keyword, and
display the results of the search,
**characterized in that** the controller (180) is further configured to:
determine an internal situation corresponding to an internal application on the mobile terminal (100) or an external situation corresponding to an external environment of the mobile terminal (100),
determine an output priority for displaying results of the search for the input keyword based on the determined internal situation or external situation of the mobile terminal (100), and
display the results of the search according to the determined output priority.

2. The terminal (100) of claim 1, wherein the controller (180) is further configured to search at least one of the Internet and a memory (160) of the mobile terminal (100) for the input keyword.

3. The terminal (100) of claim 1 or claim 2, wherein the controller (180) is further configured to display category identifiers indicating a category of the search results, wherein the category preferably includes at least one of music, a web page, an address book, a schedule, a memo, a text message, a photo, a video, and an application.

4. The terminal (100) of claim 3, wherein the controller (180) is further configured to execute an application corresponding to a selected category identifier.

5. The terminal (100) of any of the preceding claims, wherein the internal situation of the terminal includes at least one of information about whether an application is installed or executed, information about whether a content exists or is executed, information about whether a setting value exists or a range of the setting value, a battery situation, a content use frequency, and information about a use pattern per user and/or wherein the external situation of the terminal includes at least one of location information, sound information, brightness information, terminal movement information, and terminal state information and/or wherein the controller (180) is further configured to determine the output priority based on at least one of information about a main body, an activity, a proximity, a date, and a time obtainable through the terminal.

6. A terminal (100), comprising:
a wireless communication unit (110) configured to wirelessly communicate with at least one other terminal; and
a display (151) configured to display information;
**characterized in that** the terminal (100) further comprises a controller (180) configured to:
determine an internal situation corresponding to an internal application on the mobile terminal (100) or an external situation corresponding to an external environment of the mobile terminal (100),
extract a keyword from the displayed information, and
display in a search window (11) the extracted keyword (12) along with a category icon (13) corresponding to an executable application using the keyword based on the determined internal situation or the external situation of the mobile terminal (100).

7. The terminal (100) of claim 6, further comprising:
an input button configured to be selected to perform the determining of the internal or external situation, extracting the keyword and displaying the extracted keyword (12) in the search window (11).

8. The terminal (100) of claim 6 or claim 7, wherein the internal application includes a communication application for communicating with the at least one other terminal, and
wherein the controller (180) is further configured to:
extract voice or text input during the communication application, and
perform the search using the extracted voice or text as the keyword.

9. The terminal (100) of any of the claims 6 to 8, wherein the controller (180) is further configured to:
execute the application identified by the category icon based on a selection of the category icon and using the keyword; and
display details of the application corresponding to the keyword, wherein the controller (180) is preferably further configured to add an additional category icon indicating an additional category corresponding to the results of the search based on a preset input.

10. The terminal (100) of any of the claims 6 to 9, wherein the application is a schedule application and the keyword includes time data, the application is a map application and the keyword includes location data, or the application is an Internet browser application and the keyword includes data searched on the Internet browser application.

11. The terminal (100) of any of the claims 6 to 10, wherein the keyword includes a combination of keywords included in the displayed information, and the controller (180) displays at least one of a combination of category icons indicating a combination of categories corresponding to the results of the search and tabs for each keyword among the combination of keywords so when a tab is selected, search results for a corresponding word are displayed.

12. The terminal (100) of any of the claims 6 to 11, wherein a category corresponding to the category icon includes at least one of a music, a web page, an address book, a schedule, a memo, a text message, a photo, a video, and an application.

13. The terminal (100) of any of the claims 6 to 12, wherein the recognized internal situation includes at least one of information about whether an application is installed or executed, information about whether a content exists or is executed, information about whether a setting value exists or a range of the setting value, a battery situation, a content use frequency, and information about a user history pattern, and
wherein the recognized external situation includes at least one of location information, sound information, brightness information, terminal movement information, and terminal state information to recognize the external situation of the terminal.

14. A method of controlling a terminal (100), the method comprising:
allowing, via a wireless communication unit (110), wireless communication with at least one other terminal;
allowing, via a search window (11) displayed on a display (151), an input of a keyword;
determining, via a controller (180), an internal situation corresponding to an internal application on the mobile terminal (100) or an external situation corresponding to an external environment of the mobile terminal (100);
searching, via the controller (180), for the input keyword;
determining, via the controller (180), an output priority for displaying results of the search for the input keyword based on the determined internal situation or external situation of the mobile terminal (100); and
displaying, via the display (151), the results of the search according to the determined output priority.

15. A method of controlling a terminal (100), the method comprising:
allowing, via a wireless communication unit (110), wireless communication with at least one other terminal;
displaying, via a display (151), information;
determining, via a controller (180), an internal situation corresponding to an internal application on the mobile terminal (100) or an external situation corresponding to an external environment of the mobile terminal (100);
extracting, via the controller (180), a keyword from the displayed information; and
displaying, via the display (151), in a search window (11) the extracted keyword (12) along with a category icon (13) corresponding to an executable application using the keyword based on the determined internal situation or the external situation of the mobile terminal.
